# EUROPÄISCHE PATENTSCHRIFT

(11) **EP 1 589 273 B1**
(45) Veröffentlichungstag und Bekanntmachung des Hinweises auf die Patenterteilung: **24.11.2010**
(21) Anmeldenummer: 05008237.9
(22) Anmeldetag: 15.04.2005
(51) Int. Cl.: F16L 55/033, F15B 21/04, F15D 1/02

(54) **Strömungsakustisch optimierte flexible Rohrleitung**
Flow-acousticly optimized flexible pipe
Tuyau flexible avec flot acoustiquement optimisé

(30) Priorität: 24.04.2004 DE 102004020095
(43) Veröffentlichungstag der Anmeldung: 26.10.2005
(73) Patentinhaber: GM Global Technology Operations, Inc., Detroit, MI 48265-3000 (US)
(72) Erfinder: Ölke, Andreas, 65468 Trebur (DE)
(74) Vertreter: Strauss, Peter

(56) Entgegenhaltungen:
- EP-A- 0 077 130
- CH-A5- 654 092
- GB-A- 144 845
- US-A- 3 746 126
- US-A- 5 443 371

## Beschreibung

Die Erfindung betrifft eine strömungsakustisch optimierte, flexible Rohrleitung umfassend ein flexibles Leitungsrohr und Dämpfungsmittel zur Reduzierung einer Schallübertragung durch ein das Leitungsrohr durchströmendes, im Wesentlichen gasförmiges Fluid, in einem Kraftfahrzeug.

Derartige schallgedämpfte, flexible Rohrleitungen kommen üblicherweise in Kraftfahrzeugen oder Maschinen zum Einsatz, bei denen der Mensch in der unmittelbaren Nähe zu der Maschine wirkt. Insbesondere werden derartige schallgedämpfte Rohrleitungen in Kraftfahrzeugen verwendet.

Aus GB 144,845 bekannt ist die Schalldämpfung von Wellrohren oder Leitungen durch Einbringen von Schalldämpfern in Form von schallabsorbierenden Volumina, durch die das Fluid eine längere Strecke zurücklegen kann. Ferner ist es bekannt so genannte Resonatoren, durch die das Fluid hindurch fließen kann vorzusehen.

Dies hat den Nachteil, dass das Rohrvolumen zur Aufnahme der Volumina gegenüber dem nicht schallgedämpften Rohrvolumen wesentlich erhöht ist wodurch zusätzlich die Flexibilität des Rohres eingeschränkt ist. Zusätzlich kommt es insbesondere bei dem Einsatz von flexiblen Wellrohren beim Durchströmen eines gasförmigen Fluids zu Pfeif-Geräuschen.

Es ist daher die Aufgabe der vorliegenden Erfindung eine flexible Rohrleitung zu schaffen, bei der die Entstehung des Pfeifgeräusches durch das durchströmende Fluid vermieden wird, ohne dass die Flexibilität der Rohrleitung eingeschränkt ist und die Rohrleitung größer baut.

Diese Aufgabe wird ausgehend von einer schallgedämpften, flexiblen Rohrleitung gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass die in dem durchströmbaren Leitungsrohrinnenraum des Leitungsrohrs angeordneten Dämpfungsmittel undurchströmbar sind, um eine Verwirbelung des durchströmenden Fluids zu bewirken, so dass die durch das durchströmende Fluid erzeugte Schwingungen reduziert sind bzw. die Entstehung von Schwingungen vermieden wird.

Das Leitungsrohr ist als Wellrohr mit einer wellenförmig ausgebildeten Leitungsrohrwand ausgebildet. Bei einem Wellrohr handelt es sich vereinfacht um ein "glattes" Kunststoffrohr, das nach der Extrusion, durch ein spezielles Verfahren umgeformt wird, wodurch die wellenförmige Ausgestaltung der Leitungsrohrwände - sowohl der Leitungsrohrinnenwand als auch der Leitungsrohraußenwand resultiert. Die Verwendung eines Wellrohrs bietet eine höhere Flexibilität als ein "glattes" Kunststoffrohr und ist somit gerade in einem Kraftfahrzeug aufgrund des teilweise beengten und komplex aufgebauten Bauraums ideal einsetzbar.

Erfindungsgemäß basiert die Erfindung auf einem Dämpfungsmittel, das im Wesentlichen als spiralförmiges Band ausgebildet ist, welches eine definierte Anzahl von Wendeln aufweist, wobei die Wendeln mit einem definierten Steigungsgrad ausgebildet sind, wodurch eine definierte Verwirbelung des durchströmenden Fluids erzeugbar ist. Durch diese Veränderung des Strömungsprofils wird beim Einsatz von Wellrohren die Entstehung der Pfeif-Geräusche verhindert.

Diese Lösung hat den Vorteil, dass das durch den Rohrleitungsinnenraum strömende Fluid die gleiche Wegstrecke wie bei einer nicht schallgedämpften Rohrleitung zurücklegen muss und weiterhin keine wesentliche Querschnittsvergrößerung der Rohrleitung erfolgen muss, um eine Schalldämpfung des durchströmenden Fluids zu bewirken. Die verwendeten Rohrleitungen können prinzipiell jeden Rohrleitungsquerschnitt aufweisen. Es hat sich jedoch als vorteilhaft herausgestellt, dass der Rohrleitungsquerschnitt kreisförmig ausgebildet ist. Bei dem durchströmenden Fluid im Sinne der Erfindung handelt es sich um im Wesentlichen gasförmige Fluide, welche eine Schallübertragung bewirken bzw. bei Wellrohren Schallwellen erzeugen. Unter Schall beziehungsweise Schallübertragung wird jede als akustisch mittels der menschlichen Sensorik wahrnehmbare Schwingung bezeichnet. Hierunter fallen insbesondere pulsierende Schwingungen, auch Pulsation, und auch Schwingungen, die ein Pfeifton, das heißt ein relativ hochfrequentes akustisches Signal gemessen an der Skala der durch den Menschen wahrnehmbaren Frequenzen erzeugen.

Vorzugsweise ist das Leitungsrohr als ein Kunststoffwellrohr ausgebildet, welches in einem Kraftfahrzeug zum Einsatz kommt und beispielsweise ein Tankentlüftungsventil mit einem Aktivkohlefilter verbindet und/oder zwischen Motor und Karosserie angeordnet ist. Durch das durchströmende Fluid entsteht ein Pfeifgeräusch, welches deutlich in der Fahrgastzelle bzw. im näheren Umfeld des Kraftfahrzeugs durch dort befindliche Personen wahrnehmbar ist. Eine erfindungsgemäße Rohrleitung vermeidet die Entstehung des akustischen Signals, so dass es für in der Fahrgastzelle bzw. im näheren Umfeld des Kraftfahrzeuges befindliche Personen nicht wahrgenommen wird.

In Kraftfahrzeugen kommen vorteilhafter Weise insbesondere Kunststoffrohre aufgrund ihres geringen Gewichts zum Einsatz. Diese Kunststoffrohre sind zudem dünnwandig ausgebildet, um Gewicht einzusparen und um der Rohrleitung eine gewisse Flexibilität zu verleihen.

Eine besondere Ausführungsform des Dämpfungsmittels sieht vor, dass das Dämpfungsmittel einen im Wesentlichen geometrisch definierten Querschnitt aufweist, umfassend elliptische, ovale und rechteckige Geometrien beziehungsweise Querschnitte. Weiterhin ist jede beliebige Geometrie einsetzbar, die sich verwinden lässt. Vorzugsweise sind die Querschnitte aus fertigungstechnischen Gründen jedoch einfache Geometrien, wie die zuvor aufgeführten Beispiele. Als besonders günstig hat sich ein im Wesentlichen elliptischer Querschnitt herausgestellt. Dieser elliptische Querschnitt ermöglicht eine einfache Herstellung des Dämpfungsmittels bei einer hohen Stabilität.

Um eine leichte Bauweise zu erzielen, hat es sich als vorteilhaft herausgestellt, dass das Dämpfungsmittel aus einem Kunststoff hergestellt ist, der im wesentlichen die gleichen Eigenschaften aufweist wie das Material des umgebenden Leitungsrohres.

Vorzugsweise ist das Dämpfungsmittel im Wesentlichen koaxial zum Leitungsrohr angeordnet. Dabei wird das Dämpfungsmittel einfach in das Leitungsrohr eingebracht, ohne dass das Dämpfungsmittel an der Leitungsrohrwand befestigt ist. Aufgrund der Abmaße, insbesondere der äußeren Abmaße, des Dämpfungsmittels, welche in etwa den inneren Abmaßen des Leitungsrohrs entsprechen, liegt das Dämpfungsmittel etwa mittig oder genauer koaxial in dem Leitungsrohr. Dadurch dass das Dämpfungsmittel koaxial zum Leitungsrohr angeordnet ist, können die Oberseite und die Unterseite des spiralförmig gewundenen Dämpfungsmittels gleichzeitig auf das durchströmende Fluid wirken und so eine optimale Verwirbelung zur Vermeidung des Pfeifgeräusches bewirken.

Um die Entstehung des Pfeifgeräusches sicher zu unterdrücken, ist das Dämpfungsmittel jeweils auf den speziellen Einsatz hin zu optimieren. In zahlreichen Versuchen hat sich dabei herausgestellt, dass die Anzahl der Wendeln, die Gesamtlänge des Rohres und der Steigungsgrad des Dämpfungsmittels aufeinander abzustimmen sind, wodurch sich für alle Anwendungsfälle und Einsatzgebiete eine optimale Schallreduzierung erzielen lässt.

Beispielsweise ist die Anzahl der Wendeln abhängig von der in axialer Richtung zu der Längsachse gemessene Gesamtlänge des Leitungsrohrs.

Zudem hat sich gezeigt, dass der Steigungsgrad der Wendeln abhängig von der in axialer Richtung zu der Längsachse gemessenen Gesamtlänge des Leitungsrohrs ist.

Insbesondere hat es sich als vorteilhaft erwiesen, einen als Turbulator ausgebildeten Turbulenzgenerator in einem Leitungsrohr zur Verwirbelung des durchströmenden Fluids und damit zur Vermeidung des durch das Fluid erzeugten Schalls zu verwenden, wobei das Leitungsrohr beispielsweise zwischen Motor und Karosserie und besonders bevorzugt zwischen einem Tankentlüftungsventil und einem Aktivkohlefilter angeordnet ist. Hierzu lassen sich gängige Turbulenzgeneratoren wie beispielsweise Turbulatoren verwenden. Diese werden unter anderem schon in Leitungen für im Wesentlichen flüssige Fluide zur Verbesserung der Benetzung der Leitungsinnenwand verwendet, um einen besseren Wärmeübergang zwischen Fluid und Rohrwandung zu erreichen. Ein Einsatz in Wellrohren, die mit einem gasförmigen Fluid durchströmt werden, um das Pfeifgeräusch zu unterdrücken, ist jedoch neu, wobei der verwendete Turbulator je nach Leitungslänge entsprechend ausgebildet sein muss, um eine optimale Geräuschvermeidung zu ermöglichen.

Bei Versuchen hat sich die Verwendung eines Turbulators in einem Leitungsrohr, welches zwischen einem Tankentlüftungsventil und einem Aktivkohlefilter angeordnet ist, als vorteilhaft beziehungsweise als geräuschverhindernd erwiesen.

Weitere die Erfindung verbessernden Maßnahmen sind in den Unteransprüchen angegeben oder werden nachstehend gemeinsam mit der Beschreibung eines bevorzugten Ausführungsbeispiels der Erfindung anhand der Figuren näher dargestellt. Es zeigt:
- Fig. 1: eine perspektivische Ansicht eines Dämpfungsmittels,
- Fig. 2: eine Seitenansicht eines Ausschnitts des Dämpfungsmittels nach Fig. 1 und
- Fig. 3: eine schematische Darstellung der Anordnung des Ausschnitts des Dämpfungsmittels nach Fig. 1 in einer Rohrleitung.

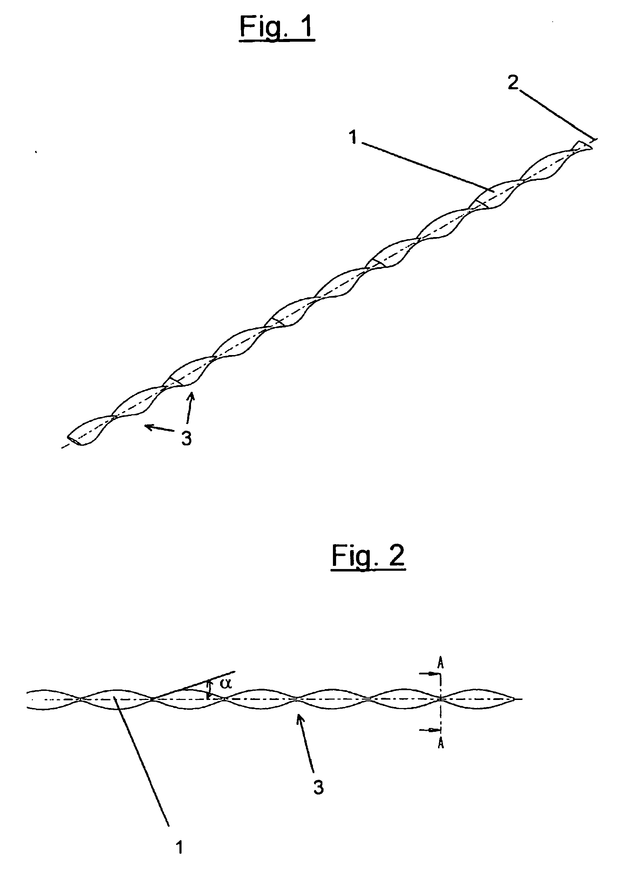

Das Dämpfungsmittel 1 nach Fig. 1 ist als im Wesentlichen spiralförmig ausgebildetes Band oder als spiralförmiger Materialstreifen ausgebildet. Dabei weist der Materialstreifen in Längsrichtung eine Mittelachse 2 auf, um die der Materialstreifen beziehungsweise das Band oder allgemein das Dämpfungsmittel 1 gewunden ist. Durch den elliptischen Querschnitt des Dämpfungsmittels 1 entstehen durch die Verwindung um die Längsachse 2 so genannte Wendeln 3, wobei die Wendeln 3 einen Steigungsgrad aufweisen. Die Wendeln 3 sind gleichmäßig über das Dämpfungsmittel in axialer Richtung verteilt.

In Fig. 2 ist das Dämpfungsmittel 1 in einer Seitenansicht dargestellt. Man erkennt deutlich die Wendeln 3. Schematisch ist der Steigungsgrad α einer Wendel 3 dargestellt. Man erkennt, dass die Wendeln 3 im Wesentlichen gleichmäßig mit einem im Wesentlichen gleichen Steigungsgrad α über das Dämpfungsmittel 1 angeordnet sind.

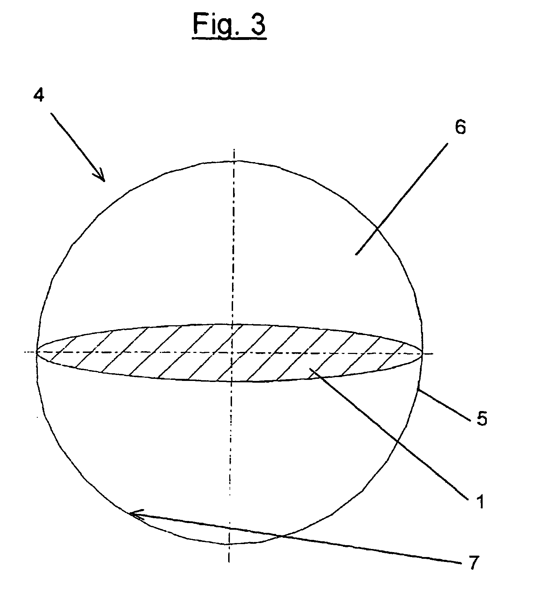

In Fig. 3 ist schematisch eine strömungsakustisch optimierte, flexible Rohrleitung 4 umfassend ein Leitungsrohr 5 mit einem Leitungsrohrinnenraum 6, der von einer Leitungsrohrwand 7 begrenzt ist und einem etwa mittig in dem Leitungsrohr 5, genauer dem Leitungsrohrinnenraum 6 angeordnetes Dämpfungsmittel 1 im Querschnitt dargestellt. Der Querschnitt des Leitungsrohrs 5, genauer des Leitungsrohrinnenraums 6 ist kreisförmig, der Querschnitt des Dämpfungsmittels 1 elliptisch ausgebildet, wobei die elliptische Querschnittsfläche des Dämpfungsmittels 1 in etwa mittig zu der kreisförmigen Querschnittsfläche des Leitungsrohrinnenraums 6 in dem Leitungsrohr 5 angeordnet ist, das heißt die Mittelpunkte der Querschnittsgeometrie des Dämpfungsmittels 1 und des Rohrleitungsinnenraums 6 sind im Wesentlichen deckungsgleich. Das Dämpfungsmittel 1 tangiert die Leitungsrohrwand 7 jeweils mit der am weitesten von der Längsachse entferntesten Oberfläche, wodurch der Leitungsrohrinnenraum 6 in zwei Leitungsrohrabschnitte unterteilt ist. Durch den Kontakt mit der Leitungsrohrwand 7 wird das Dämpfungsmittel 1 in etwa in der Mitte des Leitungsrohrinnenraums 6 gehalten, wobei das Dämpfungsmittel 1 lose nach Art einer Spielpassung gelagert ist. Durch diese Anordnung entsteht eine durch die Struktur des Dämpfungsmittels 1 hervorgerufene Verwirbelung des durch das Leitungsrohr 5 beziehungsweise durch die Rohrleitung 4 strömenden Fluids, wodurch das für Wellrohr typische Pfeifen verhindert wird.

### Bezugszeichenliste

- 1: Dämpfungsmittel
- 2: Längsachse
- 3: Wendel
- 4: Schwingungsakustisch optimierte Rohrleitung
- 5: Leitungsrohr
- 6: Leitungsrohrinnenraum
- 7: Leitungsrohrwand
- α: Steigungsgrad

## Patentansprüche

1. Strömungsakustisch optimierte, zum Anordnen in ein Kraftfahrzeug vorgesehene flexible Rohrleitung (4) umfassend ein flexibles Leitungsrohr (5), das als Wellrohr mit einer wellenförmig ausgebildeten Leitungsrohrwand (7) ausgebildet ist, und Dämpfungsmittel (1) zur Vermeidung einer Schallerzeugung durch ein das Leitungsrohr (5) durchströmendes, im Wesentlichen gasförmiges Fluid, **wobei** die in dem durchströmbaren Leitungsrohrinnenraum (6) des Leitungsrohrs (5) angeordneten Dämpfungsmittel (1) undurchströmbar sind, um eine Verwirbelung des durchströmenden Fluids zu bewirken, **dadurch gekennzeichnet, dass** die durch das durchströmende Fluid erzeugten Schwingungen durch die Verwirbelung reduziert sind und das Dämpfungsmittel (1) als im Wesentlichen spiralförmiges Band ausgebildet ist, welches eine definierte Anzahl von Wendeln (3) aufweist, wobei die Wendel (3) mit einem definierten Steigungsgrad (α) ausgebildet sind, wodurch eine definierte Verwirbelung des durchströmenden Fluids erzeugbar ist.

2. Schwingungsgedämpfte, flexible Rohrleitung (4) nach Anspruch 1, **dadurch gekennzeichnet, dass** das Leitungsrohr (5) als ein flexibles Kunststoffrohr ausgebildet ist, welches zum Verbinden eines Tankentlüftungsventils mit einem Aktivkohlefilter vorgesehen und/oder zum Anordnen zwischen Motor und Karosserie vorgesehen ist.

3. Schwingungsgedämpfte, flexible Rohrleitung (4) nach einem der vorherigen Ansprüche, **dadurch gekennzeichnet, dass** das Dämpfungsmittel (1) einen im Wesentlichen geometrisch definierten Querschnitt aufweist, umfassend elliptische, ovale und rechteckige Geometrien.

4. Schwingungsgedämpfte, flexible Rohrleitung (4) nach einem der vorherigen Ansprüche, **dadurch gekennzeichnet, dass** das Dämpfungsmittel (1) aus einem Kunststoff hergestellt ist, der im Wesentlichen die gleichen Eigenschaften aufweist, wie der des umgebenden Rohres.

5. Schwingungsgedämpfte, flexible Rohrleitung (4) nach einem der vorherigen Ansprüche, **dadurch gekennzeichnet, dass** das Dämpfungsmittel (1) im Wesentlichen koaxial zum Leitungsrohr (5) angeordnet ist.

6. Schwingungsgedämpfte, flexible Rohrleitung (4) nach einem der vorherigen Ansprüche, **dadurch gekennzeichnet, dass** die Anzahl der Wendeln (3) abhängig von der in axialer Richtung zu der Längsachse (2) gemessenen Gesamtlänge des Leitungsrohrs (5) ist.

7. Schwingungsgedämpfte, flexible Rohrleitung (4) nach einem der vorherigen Ansprüche, **dadurch gekennzeichnet, dass** der Steigungsgrad (α) der Wendel (3) abhängig von der in axialer Richtung zu der Längsachse (2) gemessenen Gesamtlänge des Leitungsrohrs (5) ist.

## Claims

1. A flow-acoustically optimized flexible pipe (4) for arrangement in a motor vehicle, comprising a flexible conduit (5) which is arranged as a corrugated pipe with a conduit wall (7) which is arranged in a corrugated manner, and damping means (1) for avoiding the generation of noise by a substantially gaseous fluid which flows through the conduit (5), with the damping means (1) arranged in the interior space (6) of the conduit which can be flowed through preventing any flow through said damping means in order to cause a turbulence of the flowing fluid, **characterized in that** the oscillations generated by the flowing fluid are reduced by the turbulence and the damping means (1) is arranged as a substantially spiral strip which comprises a defined number of spirals (3), with the spirals (3) being arranged with a defined gradient (α), by means of which a defined turbulence of the flowing fluid can be produced.

2. A vibration-damped flexible pipe (4) according to claim 1, **characterized in that** the conduit (5) is arranged as a flexible plastic pipe which for the purpose of connecting a fuel tank vent valve is provided with an activated carbon filter and/or for arrangement between engine and bodywork.

3. A vibration-damped flexible pipe (4) according to one of the preceding claims, **characterized in that** the damping means (1) has a substantially geometrically defined cross section, comprising elliptical, oval and rectangular geometries.

4. A vibration-damped flexible pipe (4) according to one of the preceding claims, **characterized in that** the damping means (1) is made of a plastic which has substantially the same properties as those of the encompassing pipe.

5. A vibration-damped flexible pipe (4) according to one of the preceding claims, **characterized in that** the damping means (1) is arranged substantially coaxially to the conduit (5).

6. A vibration-damped flexible pipe (4) according to one of the preceding claims, **characterized in that** the number of spirals (3) is dependent upon the entire length of the conduit (5) as measured in the axial direction in relation to the longitudinal axis (2).

7. A vibration-damped flexible pipe (4) according to one of the preceding claims, **characterized in that** the gradient (α) of the spirals (3) is dependent upon the entire length of the conduit (5) as measured in the axial direction in relation to the longitudinal axis (2).

## Revendications

1. Tuyauterie flexible (4) optimisée du point de vue des bruits d'écoulement, destinée à être disposée dans un véhicule à moteur, comprenant un tuyau flexible (5) conçu comme un tube ondulé avec une paroi de tuyau (7) de forme ondulée, et des moyens d'amortissement (1) destinés à éviter la production de bruits par le fluide, gazeux pour l'essentiel, qui parcourt le tuyau (5), les moyens d'amortissement (1) disposés à l'intérieur (6) du tuyau (5) dans lequel passe l'écoulement ne pouvant pas être traversés par l'écoulement afin de créer une turbulence dans le fluide en circulation, **caractérisée en ce que** les vibrations produites par le fluide en circulation sont réduites par les turbulences et le moyen d'amortissement (1) est conformé comme un ruban sensiblement en forme de spirale, qui présente un nombre défini de spires (3), les spires (3) étant conçues avec un degré d'inclinaison (α) défini, ce qui permet de créer une turbulence définie dans le fluide en circulation.

2. Tuyauterie flexible (4) à vibrations amorties selon la revendication 1, **caractérisée en ce que** le tuyau (5) est conçu comme un tube en plastique flexible, qui est destiné à relier une soupape de dégazage de réservoir avec un filtre à charbon actif et/ou à être disposé entre le moteur et la carrosserie.

3. Tuyauterie flexible (4) à vibrations amorties selon l'une des revendications précédentes, **caractérisée en ce que** le moyen d'amortissement (1) présente une section de géométrie sensiblement définie, comprenant des géométries elliptiques, ovales et rectangulaires.

4. Tuyauterie flexible (4) à vibrations amorties selon l'une des revendications précédentes, **caractérisée en ce que** le moyen d'amortissement (1) est fait d'une matière plastique ayant pour l'essentiel les mêmes propriétés que le tuyau environnant.

5. Tuyauterie flexible (4) à vibrations amorties selon l'une des revendications précédentes, **caractérisée en ce que** le moyen d'amortissement (1) est disposé de façon sensiblement coaxiale par rapport au tuyau (5).

6. Tuyauterie flexible (4) à vibrations amorties selon l'une des revendications précédentes, **caractérisée en ce que** le nombre de spires (3) dépend de la longueur totale du tuyau (5) mesurée dans le sens axial par rapport à l'axe longitudinal (2).

7. Tuyauterie flexible (4) à vibrations amorties selon l'une des revendications précédentes, **caractérisée en ce que** l'angle d'inclinaison (α) des spires (3) dépend de la longueur totale du tuyau (5) mesurée dans le sens axial par rapport à l'axe longitudinal (2).
